# EUROPÄISCHE PATENTSCHRIFT

(11) **EP 2 321 553 B1**
(45) Veröffentlichungstag und Bekanntmachung des Hinweises auf die Patenterteilung: **14.03.2012**
(21) Anmeldenummer: 09782796.8
(22) Anmeldetag: 09.09.2009
(51) Int. Cl.: F16G 13/16

(54) **KETTENGLIED FÜR EINE ENERGIEFÜHRUNGSKETTE**
CHAIN LINK FOR AN ENERGY GUIDING CHAIN
MAILLON DE CHAINE POUR UNE CHAINE DE TRANSMISSION D'ENERGIE

(30) Priorität: 10.09.2008 DE 102008046700
(43) Veröffentlichungstag der Anmeldung: 18.05.2011
(73) Patentinhaber: Murrplastik Systemtechnik GmbH, 71570 Oppenweiler (DE)
(72) Erfinder: JOSTMEIER, Helmut, 71540 Murrhardt (DE); KAUFMANN, Andreas, 71522 Backnang (DE); RÜHLE, Rainer, 71570 Oppenweiler (DE)
(74) Vertreter: Reule, Hanspeter
(86) Internationale Anmeldenummer: PCT/EP2009/061666
(87) Internationale Veröffentlichungsnummer: WO 2010/029092

(56) Entgegenhaltungen:
- EP-A1- 0 520 915
- EP-A2- 1 703 168
- US-A- 4 590 961
- US-A- 5 108 350

## Beschreibung

Die Erfindung betrifft ein Kettenglied für eine Energieführungskette gemäß Oberbegriff des Anspruchs 1.

Solche Kettenglieder, zum Beispiel EP0520915, werden zur Bildung einer Energieführungskette in Längsrichtung aneinander gereiht, indem die ersten Endbereiche der Seitenglieder eines ersten Kettenglieds mit den zweiten Endbereichen der Seitenglieder eines zweiten Kettenglieds verbunden werden. Die aufeinander folgenden Kettenglieder sind begrenzt gegeneinander verschwenkbar, indem die Anschlagelemente in den Vertiefungen des jeweils folgenden Kettenglieds begrenzt beweglich sind. Dabei ist es bekannt, Anschlageinrichtungen in Form von sogenannten Radienscheiben zu verwenden, die lösbar und nicht drehbar am Seitenglied befestigt sind und deren Anschlagelemente kreisbogenförmig ausgebildet sind. Auch die Vertiefungen zur Aufnahme der Anschlagelemente sind kreisbogenförmig ausgebildet, erstrecken sich jedoch über einen größeren Winkel, so dass die Anschlagelemente in ihnen hin- und herbeweglich sind. Es versteht sich von selbst, dass die Anschlagelemente und die Vertiefungen bei zusammengebauter Energieführungskette an jedem Gelenk einen gemeinsamen Kreismittelpunkt aufweisen. Die Befestigung der Radienscheiben am Seitenglied erfolgt bei bekannten Energieführungsketten dadurch, dass sie auf der den Anschlagelementen abgewandten Seite Noppen als Befestigungselemente aufweisen, die zum Befestigen am Seitenglied in weitere Vertiefungen in der Wand des Seitenglieds passgenau eingefügt sind. Aus dieser Anordnung ergibt sich jedoch der Nachteil, dass die Vertiefungen nicht beliebig tief gewählt werden können, so dass die Befestigungsnoppen relativ flach sind und die Kräfte, die sie aufnehmen können, dadurch beschränkt sind. Desweiteren ist von außen
Aus der EP 1 703 168 A2 ist eine Energieführungskette bekannt, deren Kettenglieder zusätzlich zu die Verschwenkbarkeit begrenzenden Anschlagelementen mit elastisch verformbaren Dämpfungselementen ausgestattet sind. Aus der US 5 108 350 ist ebenfalls eine Energieführungskette mit begrenzt gegeneinander verschwenkbaren Kettengliedern bekannt. nicht ersichtlich, welche Art von Radienscheiben in der Energieführungskette eingebaut sind.

Es ist daher Aufgabe der Erfindung, ein Kettenglied der eingangs genannten Art derart weiterzubilden, dass es belastbarer ist.

Die Aufgabe wird erfindungsgemäß durch ein Kettenglied mit den Merkmalen des Anspruchs 1 gelöst. Vorteilhafte Weiterbildungen der Erfindung sind Gegenstand der abhängigen Ansprüche.

Der Erfindung liegt der Gedanke zugrunde, dass die Befestigungselemente nahezu beliebig weit in die Wanddurchbrüche eingeführt bzw. durch diese durchgeführt werden können, so dass ihre Höhe nicht so stark eingeschränkt ist, wie bei den bekannten Radienscheiben. Desweiteren sind die Befestigungselemente bei dieser Art der Anbringung von außen auch bei zusammengebauter Energieführungskette sichtbar, wodurch die Kette ein ansprechendes Design erhält. Schließlich kann bei entsprechender Kennzeichnung abgelesen werden, welche Art von Radienscheibe in der Energieführungskette verwendet wird.

Die Befestigung der Anschlageinrichtung im Seitenglied wird noch weiter verbessert, wenn die Befestigungselemente passgenau in die Wanddurchbrüche eingefügt sind. Zweckmäßig weisen die Befestigungselemente eine Höhe auf, die der Dicke der die Wanddurchbrüche aufweisenden Wände der Seitenglieder entspricht. Die Befestigungselemente schließen dann plan mit der Außenfläche des Kettenglieds ab, wodurch die Wanddicke optimal ausgenutzt wird, ohne dass Teile über die Außenfläche überstehen. Als Designmerkmal können die Befestigungselemente eine andere Farbe aufweisen als die Seitenglieder. Um die Anschlageinrichtung von außen identifizierbar zu machen, wird bevorzugt, dass zumindest ein Teil der Befestigungselemente jeweils auf einer zur zweiten Fläche der Scheibe parallelen Beschriftungsfläche eine Beschriftung trägt, die somit durch den jeweiligen Wanddurchbruch sichtbar ist.

Vorteilhaft ist jede der Scheiben an einer dem anderen Seitenglied zugewandten Innenseite des jeweiligen Seitenglieds angeordnet. Die Befestigungselemente greifen dann von innen nach außen durch die Wanddurchbrüche durch. Zweckmäßig sind die Befestigungselemente und die Anschlagelemente konzentrisch um einen Mittelpunkt der Scheibe angeordnet.

Für die beiden Seitenglieder, die in Längsrichtung der Energieführungskette gesehen eine linke und eine rechte Begrenzung des Kettenglieds bilden, sind aus Symmetriegründen zwei unterschiedliche Anschlageinrichtungen erforderlich. Um Fehler beim Zusammenbau zu vermeiden, wird bevorzugt, dass die Befestigungselemente zumindest teilweise in unterschiedlichen Winkelabständen zueinander angeordnet sind. Eine linke Anschlageinrichtung kann somit nicht in ein rechtes Seitenglied eingesetzt werden und umgekehrt. Zur Bildung einer Energieführungskette wird eine Vielzahl von solchen Kettengliedern derart in Kettenlängsrichtung aneinander gereiht, dass die Anschlagelemente eines Kettenglieds in die Vertiefungen des folgenden Kettenglieds eingreifen.

Im Folgenden wird die Erfindung anhand eines in der Zeichnung schematisch dargestellten Ausführungsbeispiels näher erläutert. Es zeigen
- Fig. 1: ein Kettenglied mit abgenommenem oberem Rahmensteg;
- Fig. 2: ein Seitenglied mit zugehöriger Anschlageinrichtung und
- Fig. 3a, 3b: eine als Radienscheibe ausgebildete Anschlageinrichtung in perspektivischer Ansicht von vorne und von hinten.

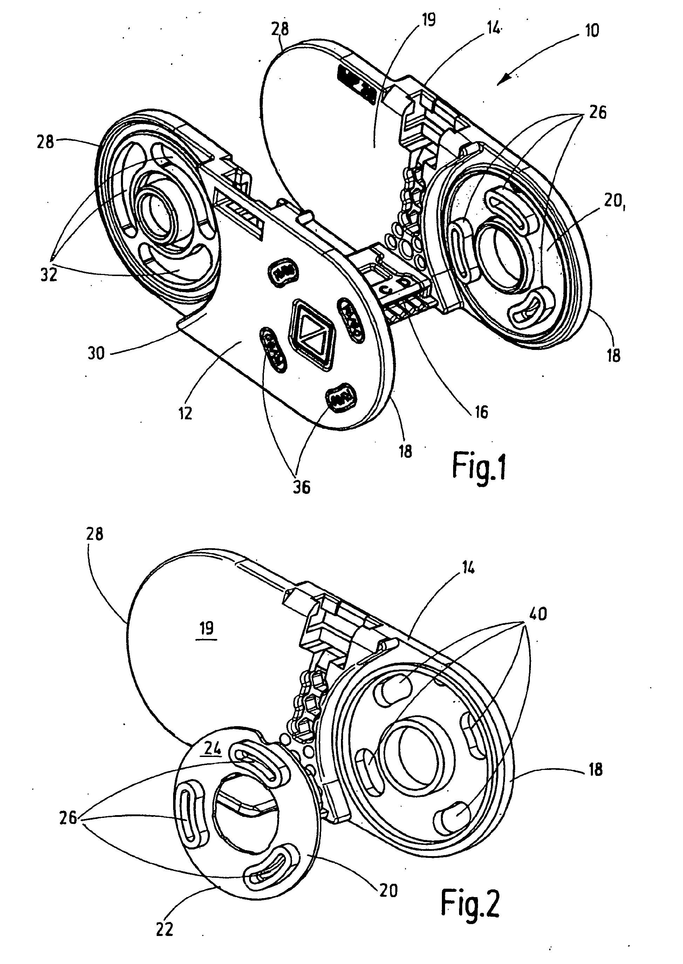

Das in Fig. 1 dargestellte Kettenglied 10 weist zwei Seitenglieder 12, 14 auf, die parallel im Abstand zueinander angeordnet sind. Die beiden Seitenglieder 12, 14 werden durch einen Rahmensteg 16 an der Unterseite des Kettenglieds 10 miteinander verbunden. Ein oberer Rahmensteg ist ebenfalls vorgesehen, fehlt aber in der Darstellung gemäß Fig. 1. Das dargestellte Kettenglied 10 ist dazu bestimmt, mit weiteren baugleichen Kettengliedern eine gelenkige Energieführungskette zu bilden, bei der die Kettenglieder in Kettenlängsrichtung aneinandergereiht begrenzt gegeneinander verschwenkbar miteinander verbunden sind. Die Seitenglieder 12, 14 und die Rahmenstege 16 der Energieführungskette begrenzen einen Führungskanal, in dem Versorgungsleitungen wie beispielsweise elektrische Kabel gegen Umwelteinflüsse geschützt aufgenommen werden.

Zur Festlegung des maximalen Schwenkwinkels zwischen zwei aufeinanderfolgenden Kettengliedern weisen die Seitenglieder 12, 14 des in Fig. 1 beispielhaft dargestellten Kettenglieds 10 in ihrem ersten Endbereich 18 an ihrer Innenseite 19 jeweils eine Anschlageinrichtung in Form einer Radienscheibe 20 auf. Diese weist eine kreisringförmige Scheibe 22 auf, die an ihrer in Fig. 1 und 2 dem Betrachter zugewandten ersten Fläche 24 drei in konstantem Winkelabstand zueinander angeordnete kreisbogenförmige Anschlagelemente 26 aufweist. In ihrem zweiten Endbereich 28 weisen die Seitenglieder 12, 14 jeweils an ihrer Außenseite 30 drei kreisbogenförmige Vertiefungen 32 auf, in die beim Zusammenbau der Energieführungskette die Anschlagelemente 26 des folgenden Kettenglieds eingesetzt werden. Die Vertiefungen 32 erstrecken sich über einen größeren Winkelbereich als die Anschlagelemente 26, so dass diese in den Vertiefungen 32 zum Verschwenken der Kettenglieder gegeneinander hin- und herbewegt werden können.

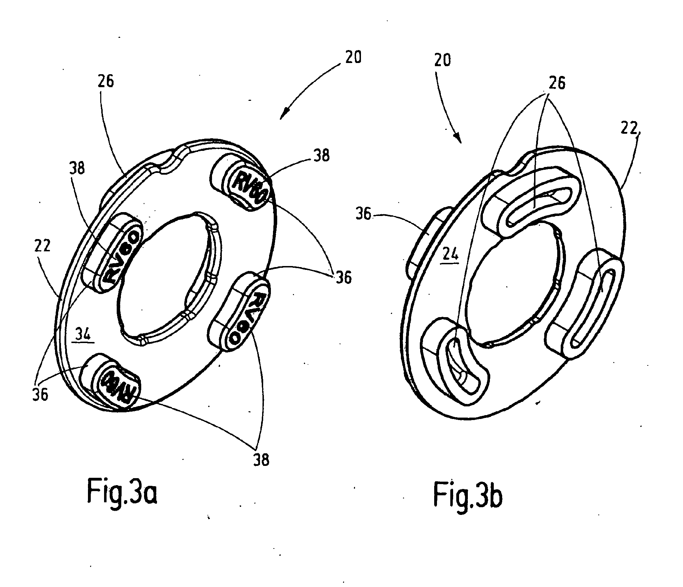

Die Anschlageinrichtungen 20, die in Fig. 3a, 3b im Detail dargestellt sind, sind einstückig als Spritzgussteile gefertigt, ebenso wie die Seitenglieder 12, 14 als Spritzgussteile gefertigt sind. An der der ersten Fläche 24 abgewandten zweiten Fläche 34 der Scheibe 22 stehen vier noppenartige Befestigungselemente 36 vor, die auf einer zur zweiten Fläche 34 parallelen Beschriftungsfläche 38 jeweils eine Beschriftung zur Kennzeichnung der Anschlageinrichtung 20 tragen. Die Befestigungselemente 36 sind zur Befestigung der Anschlageinrichtung 20 am jeweiligen Seitenglied 12, 14 in Wanddurchbrüche 40 im Seitenglied 12, 14 eingefügt. Dabei weisen die Befestigungselemente 36 eine Höhe auf, die der Wanddicke im Bereich der Wanddurchbrüche 40 entspricht, so dass die Beschriftungsflächen 38 zur Außenseite 30 plan angeordnet sind. Die Befestigungselemente 36 sind zudem passgenau in die Wanddurchbrüche 40 eingesetzt, so dass eine stabile Verbindung zwischen der Anschlageinrichtung 20 und dem jeweiligen Seitenglied 12, 14 erreicht wird. Die auf den Typ der Anschlageinrichtung 20 hinweisende Beschriftung auf den Beschriftungsflächen 38 ist, wie in Fig. 1 gezeigt, auch dann lesbar, wenn die Energieführungskette zusammengebaut ist und sich im Einsatz befindet. Zudem wird ein beispielsweise auf den Hersteller hinweisendes Designmerkmal erzielt, wenn die für die Seitenglieder 12, 14 einerseits und für die Anschlageinrichtungen 20 andererseits verwendeten Kunststoffe unterschiedliche Farben aufweisen.

Aufgrund der Spiegelsymmetrie des Kettenglieds 10 bezüglich seiner Längsmittelebene muss am linken Seitenglied 12 eine andere Anschlageinrichtung 20 befestigt werden als am rechten Seitenglied 14. Um zu vermeiden, dass in eines der Seitenglieder 12, 14 eine falsche Anschlageinrichtung 20 eingesetzt wird, weisen die Befestigungselemente 36 teilweise unterschiedliche Winkelabstände zueinander auf, die an die Winkelabstände der Wanddurchbrüche 40 angepasst sind. Die Anschlagelemente 26 sind bezüglich der Vertiefungen 32 so angeordnet, dass beim Zusammenbau von identischen Kettengliedern 10 die Energieführungskette eine leichte Wölbung aufweist, so dass sie bei freitragender Anordnung aufgrund ihres Gewichts und ihrer Elastizität nahezu gerade verläuft.

Zusammenfassend ist folgendes festzuhalten: Die Erfindung betrifft ein Kettenglied 10 für eine Energieführungskette mit zwei im Abstand voneinander und parallel zueinander angeordneten Seitengliedern 12, 14 und mit mindestens einem die Seitenglieder 12, 14 miteinander verbindenden Rahmensteg 16, wobei jedes der Seitenglieder 12, 14 in einem ersten Endbereich 18 eine Anschlageinrichtung 20 trägt, die mit dem Seitenglied 12, 14 lösbar und unbeweglich verbunden ist und eine Scheibe 22 sowie mindestens ein aus einer ersten Fläche 24 der Scheibe 22 vorstehendes Anschlagelement 26 aufweist, und wobei jedes der Seitenglieder 12, 14 in seinem zweiten Endbereich 28 eine der Zahl der Anschlagelemente 26 entsprechende Zahl von Vertiefungen 32 zur Aufnahme der Anschlagelemente 26 eines in Kettenlängsrichtung folgenden Kettenglieds und zur Begrenzung des Schwenkwinkels zwischen den aufeinanderfolgenden Kettengliedern aufweist. Erfindungsgemäß ist vorgesehen, dass jedes der Seitenglieder 12, 14 in seinem ersten Endbereich 18 mehrere Wanddurchbrüche 40 aufweist und dass jede Anschlageinrichtung 20 eine der Zahl der Wanddurchbrüche 40 entsprechende Zahl von aus einer der ersten Fläche 24 abgewandten zweiten Fläche 34 der Scheibe 22 vorstehenden, zur Form der Wanddurchbrüche 40 komplementären, zumindest teilweise durch die Wanddurchbrüche 40 durchgreifenden Befestigungselementen 36 aufweist.

## Patentansprüche

1. Kettenglied für eine Energieführungskette mit zwei im Abstand voneinander und parallel zueinander angeordneten Seitengliedern (12, 14) und mit mindestens einem die Seitenglieder (12, 14) miteinander verbindenden Rahmensteg (16), wobei jedes der Seitenglieder (12, 14) in einem ersten Endbereich (18) eine Anschlageinrichtung (20) trägt, die mit dem Seitenglied (12, 14) lösbar und unbeweglich verbunden ist und eine Scheibe (22) sowie mindestens ein aus einer ersten Fläche (24) der Scheibe (22) vorstehendes Anschlagelement (26) aufweist, und wobei jedes der Seitenglieder (12, 14) in seinem zweiten Endbereich (28) eine der Zahl der Anschlagelemente (26) entsprechende Zahl von Vertiefungen (32) zur Aufnahme der Anschlagelemente (26) eines in Kettenlängsrichtung folgenden Kettenglieds und zur Begrenzung des Schwenkwinkels zwischen den aufeinander folgenden Kettengliedern aufweist, wobei jedes der Seitenglieder (12, 14) in seinem ersten Endbereich (18) mehrere Wanddurchbrüche (40) aufweist, und wobei jede jede Anschlageinrichtung (20) eine der Zahl der Wanddurchbrüche (40) entsprechende Zahl von , zur Form der Wanddurchbrüche (40) komplementären, zumindest teilweise durch die Wanddurchbrüche (40) durchgreifenden Befestigungselementen (36) aufweist, **dadurch gekennzeichnet, dass** die Befestigungselemente aus einer der Ersten Fläche (24) abgewandten zweiten Fläche (34) der Scheibe (22) vorstehen.

2. Kettenglied nach Anspruch 1, **dadurch gekennzeichnet, dass** die Befestigungselemente (36) passgenau in die Wanddurchbrüche (40) eingefügt sind.

3. Kettenglied nach Anspruch 1 oder 2, **dadurch gekennzeichnet, dass** die Befestigungselemente (36) eine Höhe aufweisen, die der Dicke der
die Wanddurchbrüche (40) aufweisenden Wände der Seitenglieder (12, 14) entspricht.

4. Kettenglied nach einem der vorangehenden Ansprüche, **dadurch gekennzeichnet, dass** die Befestigungselemente (36) eine andere Farbe aufweisen als die Seitenglieder (12, 14).

5. Kettenglied nach einem der vorangehenden Ansprüche, **dadurch gekennzeichnet, dass** zumindest ein Teil der Befestigungselemente (36) jeweils auf einer zur zweiten Fläche (34) der Scheibe (22) parallelen Beschriftungsfläche (38) eine Beschriftung trägt.

6. Kettenglied nach einem der vorangehenden Ansprüche, **dadurch gekennzeichnet, dass** jede der Scheiben (22) an einer dem anderen Seitenglied (14, 12) zugewandten Innenseite (19) des jeweiligen Seitenglieds (12, 14) angeordnet ist.

7. Kettenglied nach einem der vorangehenden Ansprüche, **dadurch gekennzeichnet, dass** die Befestigungselemente (36) und die Anschlagelemente (26) konzentrisch um einen Mittelpunkt der Scheibe (22) angeordnet sind.

8. Kettenglied nach Anspruch 7, **dadurch gekennzeichnet, dass** die Befestigungselemente (36) zumindest teilweise in unterschiedlichen Winkelabständen zueinander angeordnet sind.

9. Energieführungskette mit einer Anzahl von in Kettenlängsrichtung aneinandergereihten Kettengliedern (10) nach einem der vorangehenden Ansprüche, wobei die Anschlagelemente (26) eines Kettenglieds (10) in die Vertiefungen (32) des folgenden Kettenglieds (10) eingreifen.

## Claims

1. Chain link for an energy guiding chain, comprising two lateral links (12, 14) arranged at a distance from each other and parallel to each other, and at least one frame section (16) connecting the lateral links (12, 14) together wherein each lateral link (12, 14) carries an abutment means (20) in a first end region (18), that is connected to the lateral link (12, 14) in a detachable and fixed manner, and comprises a disk (22) and at least one abutment element (26) projecting from a first surface (24) of the disk (22), and wherein each of the lateral links (12, 14) comprise, in its second end region (28), a number of recesses (32), corresponding to the number of abutment elements (26), for receiving the abutment elements (26) of a chain link following in the longitudinal direction of the chain and for defining the pivoting angle between the successive chain links, wherein each of the lateral links (12, 14) comprise a plurality of wall holes (40) in its first end region (18), and wherein each abutment device (20) comprises a number of fixing elements (36) corresponding to the number of wall holes (40), said fixing elements being complementary to the shape of the wall holes (40), and at least partially penetrating the wall holes (40), **characterised in that** the fixing elements protrude from a second surface (34) of the disk (22), facing away from the first surface (24).

2. Chain link according to claim 1, **characterised in that** the fixing elements (36) are inserted with a precise fit into the wall holes (40).

3. Chain link according to claim 1 or 2, **characterised in that** the fixing elements (36) have a height which corresponds to the thickness of the walls of the lateral links (12, 14) comprising the wall holes (40).

4. Chain link according to any one of the preceding claims, **characterised in that** the fixing elements (36) have a different colour from that of the lateral links (12, 14).

5. Chain link according to any one of the preceding claims, **characterised in that** at least a part of the fixing elements (36) bear an inscription in each case on an inscription surface (38) parallel to the second surface (34) of the disk (22).

6. Chain link according to any one of the preceding claims, **characterised in that** each of the disks (22) is arranged on an inside (19) of the respective lateral link (12, 14) facing towards the other lateral link (14, 12).

7. Chain link according to any one of the preceding claims, **characterised in that** the fixing elements (36) and the abutment elements (26) are arranged concentrically around a central point of the disk (22).

8. Chain link according to claim 7, **characterised in that** the fixing elements (36) are at least partially arranged at different angular distances from one another.

9. Energy guiding chain with a number of chain links (10) strung together in the longitudinal direction of the chain according to any one of the preceding claims, wherein the abutment elements (26) of one chain link (10) engage in the recesses (32) of the following chain link (10).

## Revendications

1. Maillon de chaîne pour une chaîne porte-câbles, avec deux éléments latéraux (12, 14) disposés à distance et parallèlement entre eux, et avec au moins une entretoise de cadre (16) reliant entre eux les éléments latéraux (12, 14), sachant que chacun des éléments latéraux (12, 14) porte dans une première région terminale (18) un organe de butée (20), qui est relié de manière immobile et amovible à l'élément latéral (12, 14) et qui présente un disque (22) ainsi qu'au moins un élément de butée (26) dépassant d'une première face (24) du disque (22), et sachant que chacun des éléments latéraux (12, 14) présente dans sa deuxième région terminale (28) un nombre de renfoncements (32) correspondant au nombre d'éléments de butée (26), les renfoncements (32) servant à recevoir les éléments de butée (26) d'un maillon de chaîne suivant dans la direction longitudinale de la chaîne et à limiter l'angle de pivotement entre les maillons de chaîne consécutifs, sachant que chacun des éléments latéraux (12, 14) présente dans sa première région terminale (18) plusieurs percements de paroi (40) et sachant que chaque organe de butée (20) présente un nombre d'éléments de fixation (36) correspondant au nombre de percements de paroi (40), les éléments de fixation (36) étant de forme complémentaire aux percements de paroi (40) et traversant au moins partiellement les percements de paroi (40), **caractérisé en ce que** les éléments de fixation dépassent d'une deuxième face (34) du disque (22) qui est opposée à la première face (24).

2. Maillon de chaîne selon la revendication 1, **caractérisé en ce que** les éléments de fixation (36) sont insérés en ajustement précis dans les percements de paroi (40).

3. Maillon de chaîne selon la revendication 1 ou 2, **caractérisé en ce que** les éléments de fixation (36) présentent une hauteur qui correspond à l'épaisseur des parois des éléments latéraux (12, 14) qui présentent les percements de paroi (40).

4. Maillon de chaîne selon l'une des revendications précédentes, **caractérisé en ce que** les éléments de fixation (36) présentent une autre couleur que les éléments latéraux (12, 14).

5. Maillon de chaîne selon l'une des revendications précédentes, **caractérisé en ce qu'**au moins une partie des éléments de fixation (36) portent chacun une inscription sur une face d'inscription (38) parallèle à la deuxième face (34) du disque (22).

6. Maillon de chaîne selon l'une des revendications précédentes, **caractérisé en ce que** chacun des disques (22) est disposé sur un côté intérieur (19) de l'élément latéral respectif (12, 14) qui est tourné vers l'autre élément latéral (14, 12).

7. Maillon de chaîne selon l'une des revendications précédentes, **caractérisé en ce que** les éléments de fixation (36) et les éléments de butée (26) sont disposés concentriquement autour d'un centre du disque (22).

8. Maillon de chaîne selon la revendication 7, **caractérisé en ce que** les éléments de fixation (36) sont disposés au moins pour partie à des distances angulaires différentes les uns des autres.

9. Chaîne porte-câbles avec un certain nombre de maillons de chaîne (10) selon l'une des revendications précédentes, mis à la file dans la direction longitudinale de la chaîne, sachant que les éléments de butée (26) d'un maillon de chaîne (10) s'engagent dans les renfoncements (32) du maillon de chaîne (10) suivant.
